Europäisches Patentamt

European Patent Office

Office européen des brevets

(11) Numéro de publication: **0 499 172 A1**

## DEMANDE DE BREVET EUROPEEN

(21) Numéro de dépôt: **92102180.4**

(22) Date de dépôt: **10.02.92**

(51) Int. Cl.5: **G06K 13/08**, G06K 7/06

(30) Priorité: **12.02.91 FR 9101581**

(43) Date de publication de la demande:
**19.08.92 Bulletin 92/34**

(84) Etats contractants désignés:
**DE ES FR IT**

(71) Demandeur: **COMPAGNIE GENERALE
D'AUTOMATISME CGA-HBS
Le Plessis-Pâté
F-91220 Bretigny sur Orge(FR)**

(72) Inventeur: **Schoenhenz, Daniel
8, rue des Fauvettes
F-91610 Ballancourt(FR)**

(74) Mandataire: **Weinmiller, Jürgen et al
Lennéstrasse 9 Postfach 24
W-8133 Feldafing(DE)**

(54) **Lecteur de carte à puce.**

(57) Lecteur de carte à puce, comprenant un canal d'acheminement (4) suivi d'un connecteur (1), et comportant un berceau (6) pivotant autour d'un axe fixe (7), un rouleau (8), dont l'axe (9) est parallèle à l'axe fixe (7) étant monté dans ce berceau avec liberté de translation selon une direction $\Delta$ perpendiculaire à son axe (9), cette direction $\Delta$ faisant un angle $\alpha$ aigu par rapport à la direction du canal d'acheminement (4), le berceau (6) comportant des moyens élastiques de rappel (13) ayant tendance à fermer l'angle $\alpha$ et des moyens moteurs (14), agissant sur commande et de puissance supérieure auxdits moyens de rappel, ayant tendance à ouvrir l'angle $\alpha$ . Le rouleau (8) comporte des moyens élastiques (11) le tirant le long de la direction $\Delta$ , dans le sens le rapprochant du sommet de l'angle $\alpha$ . Dans la position de repos du lecteur, le rouleau obture ledit canal (4), et lors de l'introduction à fond d'une carte (16) dans le lecteur, au moins une portion de la carte reste à l'extérieur du lecteur, le berceau étant en butée dans une position où l'angle $\alpha$ est inférieur à l'angle $\beta$ dont la tangente est égale au coefficient de frottement $\mu$ entre le rouleau (8) et la carte. Les moyens moteurs (14) sont alimentés après le traitement de la carte de manière à ouvrir l'angle $\alpha$ et à permettre le retrait de la carte.

FIG.3

La présente invention concerne un dispositif lecteur de carte à puce.

Lors de l'utilisation d'une carte à puce dans un appareil quelconque, le titulaire de la carte l'introduit dans l'appareil par une fente d'introduction. Au bout d'une certaine distance d'introduction, des moyens d'entraînement de la carte la prennent en charge pour la conduire vers le connecteur, de telle sorte que la carte disparaît de la portée et de la vue de l'utilisateur pour ne réapparaître qu'après le traitement de la carte.

La présente invention a pour but de proposer un lecteur de carte à puce dans lequel l'extrémité de la carte reste à portée et à la vue de l'utilisateur pendant l'opération de traitement de la carte, mais où son extraction du lecteur pendant le traitement de la carte est cependant, soit impossible, soit rendue relativement difficile par une résistance accrue.

L'invention a ainsi pour objet un lecteur de carte à puce comprenant une goulotte d'introduction suivie d'un canal d'acheminement à l'extrémité duquel est situé un connecteur standard, caractérisé en ce qu'il comprend un berceau pivotant autour d'un axe fixe perpendiculaire au sens du canal d'acheminement et situé du côté de la goulotte d'introduction, un rouleau, dont l'axe est parallèle audit axe fixe étant monté dans ce berceau avec liberté de translation selon une direction $\Delta$ perpendiculaire à son axe, cette direction $\Delta$ faisant un angle $\alpha$ aigu par rapport à la direction du canal d'acheminement, en ce que ledit berceau comporte des moyens élastiques de rappel ayant tendance à fermer ledit angle $\alpha$ et des moyens moteurs, agissant sur commande et de puissance supérieure auxdits moyens de rappel, ayant tendance à ouvrir ledit angle $\alpha$, en ce que ledit rouleau comporte des moyens élastiques tirant le rouleau le long de ladite direction $\Delta$, dans le sens le rapprochant de l'arête du dièdre formé d'une part par le plan du canal d'acheminement et d'autre part par le plan qui contient l'axe du rouleau et ladite direction $\Delta$, en ce que dans la position de repos du lecteur, avant l'introduction d'une carte, ledit rouleau obture ledit canal et en ce que lors de l'introduction à fond d'une carte dans le lecteur, au moins une portion de la carte reste à l'extérieur du lecteur, et le berceau étant en butée dans une position où ledit angle $\alpha$ est inférieur à l'angle $\beta$ dont la tangente est égale au coefficient de frottement $\mu$ entre ledit rouleau et ladite carte, lesdits moyens moteurs étant alimentés après le traitement de la carte de manière à ouvrir ledit angle $\alpha$ et à permettre le retrait de la carte.

Selon une réalisation préférée, ledit connecteur standard est monté coulissant sur une platine, l'introduction d'une carte dans le lecteur provoquant le recul du connecteur et la compression d'un ressort de rappel.

Cette caractéristique permet d'obtenir l'éjection partielle de la carte après son traitement lors de l'alimentation dudit moyen moteur qui permet de basculer le berceau dans le sens de l'ouverture de l'angle $\alpha$. Cette éjection partielle avertit l'utilisateur de la fin de l'opération.

Selon une autre caractéristique, la partie arrière dudit berceau possède un cran de verrouillage qui, en position enfoncée de la carte et en l'absence d'alimentation dudit moyen moteur, maintient le connecteur dans sa position reculée.

Dans une réalisation où l'on souhaite une impossibilité complète d'extraction de la carte pendant son traitement, la surface du rouleau est lisse.

Dans une seconde réalisation de l'invention où l'on souhaite que l'extraction soit néanmoins possible, mais avec un effort important, les deux extrémités du rouleau ont une surface lisse tandis que sa partie centrale, sur une largeur au moins égale à la largeur d'une carte, comporte une série radiale de lamelles radiales flexibles.

On va maintenant donner la description d'un exemple de mise en oeuvre de l'invention en se référant au dessin annexé dans lequel :

La figure 1 montre un lecteur de carte à puce selon l'invention en position de repos.

La figure 2 montre le lecteur avec une carte en cours d'introduction.

La figure 3 montre le lecteur en position lecture, carte complètement introduite.

La figure 4 montre le lecteur en position d'éjection.

La figure 5 montre un exemple d'un rouleau particulier assurant, non pas le blocage total de la carte pendant sa lecture, mais permettant son retrait avec un effort taré.

En se reportant aux figures, on voit un lecteur de carte à puce comportant un connecteur 1 qui est un connecteur standard classique, ce connecteur est monté coulissant sur une platine support 2 et un ressort de rappel 3 est monté entre le connecteur 1 et le fond de la platine 2.

En avant du connecteur 1 se trouve un canal d'acheminement 4 pour une carte à puce précédé d'une goulotte d'introduction 5.

Sous le canal d'acheminement 4 est situé un berceau 6 qui est monté pivotant autour d'un axe fixe 7 lié à la platine support 2. L'axe 7 est perpendiculaire au sens du canal d'acheminement 4 et il est situé du côté avant de l'appareil, c'est-à-dire du côté de la goulotte d'introduction 5.

Dans ce berceau 6 est monté un rouleau 8. Le rouleau comporte un axe 9 parallèle à l'axe 7 qui est guidé à ses deux extrémités dans une lumière 10 de chaque flanc du berceau 6. Le rouleau 8 est ainsi libre en translation le long de ces lumières 10 dont les axes $\Delta$ font un angle $\alpha$ par rapport au

canal 4. Cet angle $\alpha$ varie en fonction de la rotation du berceau 6 autour de son axe 7, mais il est toujours aigu. Le rouleau est muni de deux ressorts de rappel 11 le tirant vers l'arête du dièdre formé par, d'une part le plan du canal 4 et le plan qui contient les axes $\Delta$ et l'axe 9 du rouleau. L'extrémité arrière du berceau comporte un cran de verrouillage 12 dont le rôle sera expliqué plus loin et qui sert en même temps de butée d'arrêt pour le berceau. En effet, le berceau 6 est muni d'un ressort 13 ayant tendance à fermer l'angle $\alpha$. Par ailleurs, le berceau 6 est équipé d'un électro-aimant 14 qui agit, lorsqu'il est alimenté, dans le sens de l'ouverture de l'angle $\alpha$. La puissance de l'électro-aimant 14 est supérieure à celle du ressort 13.

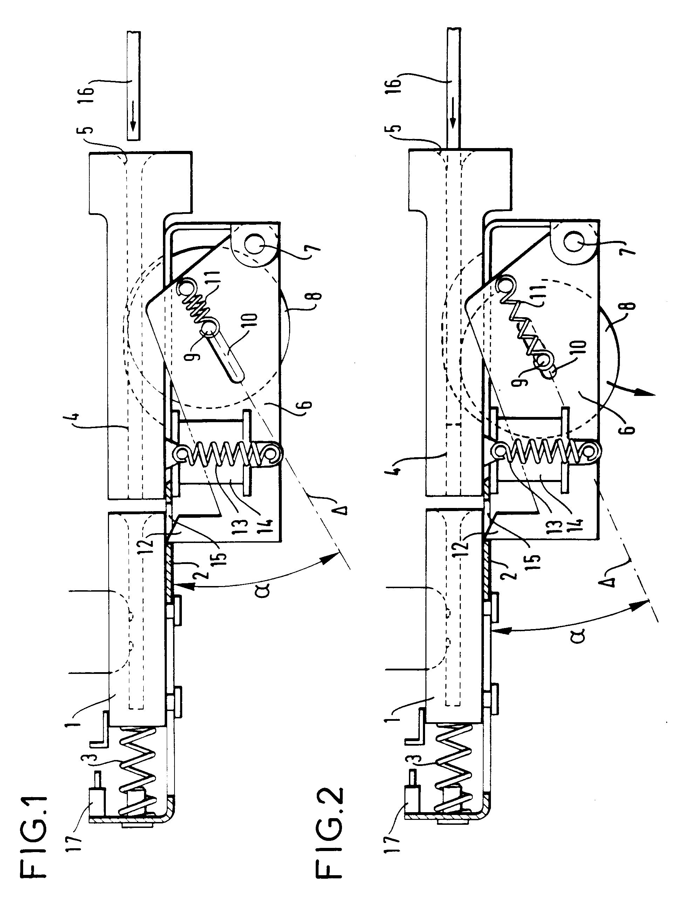

Dans la position de repos du lecteur, comme on le voit sur la figure 1, le rouleau 8 obture le canal d'acheminement 4 et le cran de verrouillage 12 du berceau 6 est en butée contre le connecteur 1 à travers une lumière 15 de la platine 2.

Le rouleau 8 est caoutchouté ou bien métallique, mais de préférence caoutchouté. Le coefficient de frottement du rouleau 8 sur la carte a une valeur égale à $\mu$. On sait que le coefficient de frottement $\mu$ est égal à tangente $\beta$. $\beta$ étant l'angle de frottement. Ainsi, pour avoir un coincement d'une carte introduite dans le canal d'introduction 4, entre le rouleau 8 et la paroi supérieure du canal 4, il faut que l'angle $\alpha$ soit inférieur à cet angle de frottement $\beta$. On a donc intérêt à ce que le coefficient de frottement $\mu$ soit plutôt assez fort pour que cet angle $\alpha$ permettant le coincement ne soit pas trop petit, il est donc préférable que le rouleau soit caoutchouté de manière à ce que le coefficient de frottement soit relativement élevé. Dans la position de repos, telle que représentée sur la figure 1, l'angle $\alpha$ est inférieur à l'angle de frottement $\beta$.

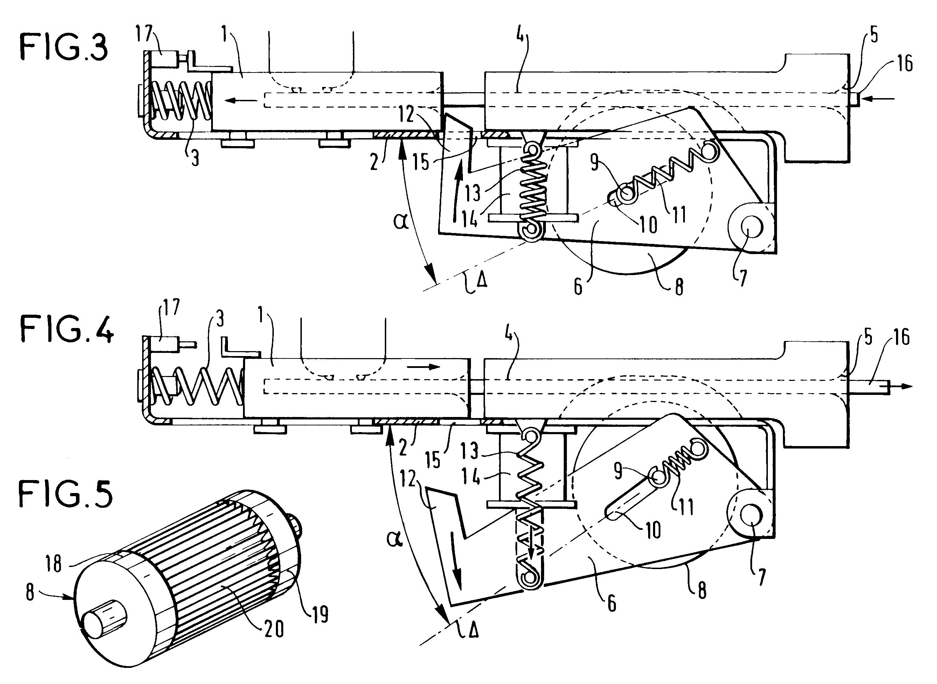

Sur la figure 2, une carte à puce 16 est introduite dans le lecteur, elle repousse avec une force relativement faible, de l'ordre de 2N par exemple, le rouleau 8. La poursuite du mouvement de la carte 16 la fait s'engager dans le connecteur 1 jusqu'à ce que, poussé à fond, le connecteur coulisse vers l'arrière et vienne actionner un contact 17. Dans cette position, figure 3, le cran de verrouillage 12 vient bloquer le connecteur 1 et l'opération de traitement de la carte commence. Si, au cours de l'opération, l'utilisateur veut retirer la carte, dont une extrémité reste en permanence à sa portée, cela est impossible, plus il tirera sur la carte, plus le rouleau 8 qui peut coulisser dans les lumières 10 coincera fortement la carte. Si l'on souhaite donner une limite à l'effort d'arrachement par exemple à 20N, on peut utiliser un rouleau, non pas à surface lisse, mais un rouleau tel que représenté figure 5 qui comporte deux extrémités lisses 18 et 19 et une portion centrale qui comporte une série de lamelles de caoutchouc 20 disposées radialement. Cette portion centrale est au moins égale à la largeur de la carte 16. Cette disposition permet, par le fléchissement des lamelles de ne pas bloquer totalement la carte, même avec un angle $\alpha < \beta$ mais de limiter l'effort d'arrachement.

Une fois le traitement de la carte effectué, l'électro-aimant 14 est alimenté, l'angle $\alpha$ s'ouvre et la carte 16 est repoussée par le ressort de rappel 3 du connecteur 1. L'utilisateur peut alors librement retirer sa carte (voir figure 4).

Dans la position de la figure 4, le rouleau 8 dégage complètement le canal d'introduction 4, facilitant la poussée de la carte par le connecteur 1.

Dans la position de repos, figure 1, on notera que le rouleau obture le canal d'introduction, ce qui empêche une éventuelle projection de liquide dans le lecteur.

**Revendications**

1.  Lecteur de carte à puce, comprenant une goulotte d'introduction (5) suivi d'un canal d'acheminement (4) à l'extrémité duquel est situé un connecteur standard (1), caractérisé en ce qu'il comprend un berceau (6) pivotant autour d'un axe fixe (7) perpendiculaire au sens du canal d'acheminement et situé du côté de la goulotte d'introduction, un rouleau (8), dont l'axe (9) est parallèle audit axe fixe (7) étant monté dans ce berceau avec liberté de translation selon une direction $\Delta$ perpendiculaire à son axe (9), cette direction $\Delta$ faisant un angle $\alpha$ aigu par rapport à la direction du canal d'acheminement (4), en ce que ledit berceau (6) comporte des moyens élastiques de rappel (13) ayant tendance à fermer ledit angle $\alpha$ et des moyens moteurs (14), agissant sur commande et de puissance supérieure auxdits moyens de rappel, ayant tendance à ouvrir ledit angle $\alpha$, en ce que ledit rouleau (8) comporte des moyens élastiques (11) tirant le rouleau le long de ladite direction $\Delta$, dans le sens le rapprochant de l'arête du dièdre formée d'une part par le plan du canal d'acheminement (4), et d'autre part par le plan qui contient l'axe (9) du rouleau et ladite direction $\Delta$, en ce que dans la position de repos du lecteur, avant l'introduction d'une carte (16), ledit rouleau obture ledit canal (4), et en ce que lors de l'introduction à fond d'une carte dans le lecteur, au moins une portion de la carte reste à l'extérieur du lecteur, le berceau étant en butée dans une position où ledit angle $\alpha$ est inférieur à l'angle $\beta$ dont la tangente est égale au coefficient de frottement $\mu$ entre ledit rouleau (8) et ladite carte, lesdits moyens moteurs (14) étant alimentés après le traitement de la carte de manière à ouvrir ledit angle $\alpha$ et à permettre le retrait de la carte.

2. Lecteur selon la revendication 1, caractérisé en ce que ledit connecteur standard (1) est monté coulissant sur une platine (2), l'introduction d'une carte dans le lecteur provoquant le recul du connecteur (1) et la compression d'un ressort de rappel (3).

3. Lecteur selon la revendication 2, caractérisé en ce que la partie arrière dudit berceau (6) possède un cran de verrouillage (12) qui, en position enfoncée de la carte et en l'absence d'alimentation dudit moyen moteur, maintient le connecteur dans sa position reculée.

4. Lecteur selon l'une des revendications précédentes, caractérisé en ce que la surface du rouleau (8) est lisse.

5. Lecteur selon l'une des revendications 1 à 4, caractérisé en ce que les deux extrémités (18, 19) du rouleau ont une surface lisse tandis que la partie centrale du rouleau sur une largeur au moins égale à la largeur d'une carte comporte une série de lamelles radiales flexibles (20).

FIG.1

FIG.2

FIG.3

FIG.4

FIG.5

EP 0 499 172 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 274 684 (OMRON)<br>* colonne 8, ligne 38 - colonne 9, ligne 49; figures 11-13 *<br>--- | 1,2 | G06K13/08<br>G06K7/06 |
| A | EP-A-0 295 607 (DIESEL KIKI)<br>* colonne 4, ligne 27 - colonne 6, ligne 41 *<br>* colonne 11, ligne 38 - colonne 13, ligne 21; figures 1-3 *<br>--- | 1,2 | |
| A | EP-A-0 336 330 (HOSIDEN)<br>* colonne 7, ligne 52 - colonne 9, ligne 53; figures 7A-7F *<br>--- | 1 | |
| A | FR-A-2 638 005 (LGZ LANDIS)<br>* abrégé; figures 1,2 *<br>--- | 1,2 | |
| A | EP-A-0 230 674 (ALLIED CORP.)<br>* abrégé; figures 4-6 *<br>----- | 1,2 | |

| DOMAINES TECHNIQUES RECHERCHES (Int. Cl.5) |
|---|
| G06K |

Le présent rapport a été établi pour toutes les revendications

| Lieu de la recherche | Date d'achèvement de la recherche | Examinateur |
|---|---|---|
| BERLIN | 31 MARS 1992 | DUCREAU F. |